# EUROPEAN PATENT APPLICATION

(11) **EP 2 645 541 A2**
(43) Date of publication of application: **02.10.2013**
(21) Application number: 13155613.6
(22) Date of filing: 18.02.2013
(51) Int. Cl.: H02K 3/52

(54) **In-vehicle motor and electric power steering device including the same**

(30) Priority: 30.03.2012 JP 2012078800
(71) Applicant: Hitachi Automotive Systems, Ltd., Hitachinaka-shi Ibaraki 312-8503 (JP)
(72) Inventor: Nakayama, Kenji, Ibaraki, 312-0062 (JP); Kawasaki, Shozo, Ibaraki, 312-0062 (JP); Kanazawa, Hiroshi, Tokyo, 100-8220 (JP); Nakatsugawa, Junnosuke, Tokyo, 100-8220 (JP); Hamada, Yasunaga, Ibaraki, 312-0062 (JP)
(74) Representative: MERH-IP Matias Erny Reichl Hoffmann

(57) **Abstract**

An in-vehicle motor includes a busbar 9 for connecting plural concentrated-winding stator coils 7. The busbar 9 includes: an arm 9uel-9ue4 extending perpendicular to a longitudinal direction of the busbar 9; a coil holder 9ua1-9ua4 provided at a tip of the arm 9uel-9ue4; and a mechanically-twisted portion provided on the arm 9uel-9ue4.

## Description

### FIELD OF THE INVENTION

The present invention relates to an in-vehicle motor and an electric power steering device including the motor.

### BACKGROUND OF THE INVENTION

As a background to the art, Japanese Unexamined Patent Application Publication No. 2010-41898 is found. In Japanese Unexamined Patent Application Publication No. 2010-41898, a motor for an electric power steering apparatus has terminals for connecting between leads and a stator coil. Each terminal is a band-shaped conductive member that has connector side terminal end portions at its opposite ends, respectively, when developed, and a plurality of stator side terminal portions protruding to one side of the conductive member along a longitudinal direction thereof. Each terminal is deformed in its thickness direction into a circular shape, and the connector side terminal end portions being bent in the same plane are connected with each other to form a connector side terminal portion. The connector side terminal portion is connected to the leads, and the stator side terminal portions are connected to the stator coil. In this manner, the arms are provided parallel to the band-shaped plate.

### SUMMARY OF THE INVENTION

Japanese Unexamined Patent Application Publication No. 2010-41898 discloses a connection structure between the leads and the stator coil. However, this connection structure has difficulties in coping with increasing number of coils due to the increase in the number of poles of in-vehicle motors. In this connection structure, for example, the arms are provided parallel to the band-shaped plate, and therefore the number of the arms is limited by arm length. Furthermore, since there are no separate connection structures for electrical connection and mechanical connection, vibration puts a load directly on an electrical junction, and it can be difficult to ensure sufficient reliability against vibration.

Accordingly, an object of the present invention is to provide an in-vehicle motor capable of coping with the increase in the number of poles of in-vehicle motors. For example, the present invention provides an in-vehicle motor in which the number of the arms is not limited by arm length and sufficient reliability against vibration is ensured.

To address the above-mentioned problems, for example, the construction defined in appended claims is employed.

The present invention includes plural solutions to the above-mentioned problems. According to an aspect of the present invention, an in-vehicle motor includes a busbar for connecting plural concentrated-winding stator coils. The busbar includes: an arm extending perpendicular to a longitudinal direction of the busbar; a coil holder provided at a tip of the arm; and a mechanically-twisted portion provided on the arm.

According to the aspect of the present invention, it is possible to provide an in-vehicle motor capable of coping with the increase in the number of poles of in-vehicle motors. Problems, constructions and advantages of this invention other than described above will become apparent from the following description of an embodiment.

### BRIEF DESCRIPTION OF THE DRAWINGS

FIG. 1 is a table showing combinations of pole number and slot number of a concentrated winding motor;
FIG. 2 is a coil configuration diagram with four parallel circuits composed of 8 poles and 12 slots;
FIG. 3 is a wiring diagram allowing for a busbar connection portion of the combination shown in FIG. 2;
FIG. 4 is a longitudinal sectional view illustrating the construction of an EPS motor;
FIG. 5 is a cross-sectional view illustrating the construction of the EPS motor;
FIG. 6 is a perspective view showing the relationship between a stator core and a busbar of the EPS motor;
FIGS. 7A and 7B are each a plan view illustrating the shape of a pressed busbar terminal;
FIG. 8 is a perspective view of a U-phase busbar terminal;
FIG. 9 is a perspective view of a neutral busbar terminal;
FIG. 10 is a perspective view of all assembled terminals;
FIG. 11 is a perspective view of a basbar case in which the basbar terminals are disposed; and
FIG. 12 is a perspective view for illustrating a coil connecting structure.

### DETAILED DESCRIPTION OF THE PREFERRED EMBODIMENT

Hereinafter, an embodiment of the present invention will be described with reference to the accompanying drawings.

In in-vehicle motors, reductions in size and weight are desired, and therefore the number of poles tends to be increased for downsizing. Also, as for coils, rather than conventional distributed winding coils, concentrated winding coils capable of making a coil end smaller tend to be employed.

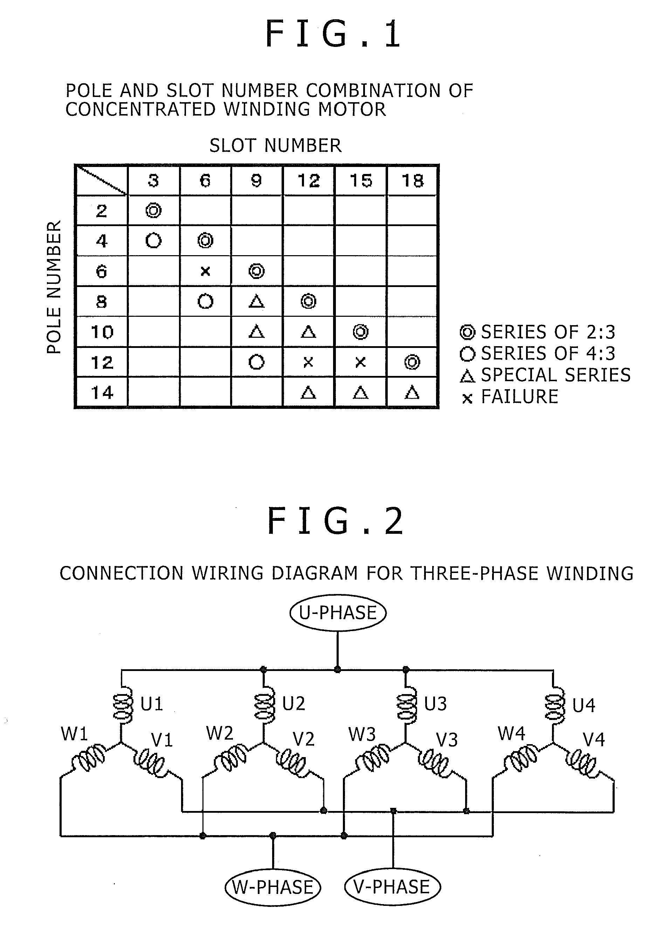

FIG. 1 shows the relationship between pole number and slot number of a concentrated winding motor. It is to be noted that, in the drawing, a double-circle denotes a combination for a series of 2:3; a circle, a series of 4:3; a triangle, a special series; and an x-mark, an exemplary combination in which the motor malfunctions.

As can be seen from FIG. 1, a series of 2:3 allowing selection of two poles each has a high degree of flexibility in design and widely used. For example, in electric power steering motors for automobile use, 8 poles and 12 slots are used. To realize further downsizing, 10 poles and 15 slots need to be selected. In the 10-pole 15-slot combination, as compared to the 8-pole 12-slot combination, the order of cogging torque increases from 24-order to 30-order, and therefore cogging torque can be reduced. However, the increase in the number of coils also leads to an increase in the number of coil terminal processing steps.

FIG. 2 is a connection wiring diagram of coils that are constructed with four parallel circuits composed of 8 poles and 12 slots and each having a Y-connected three-phase coil. U-phase coils include U1 to U4, and V-phase coils include V1 to V4, and W-phase coils include W1 to W4. As shown in FIG. 2, a three-phase coil of one of the four parallel circuits is composed of a U1-phase coil, a V1-phase coil, and a W1-phase coil. In the same manner, other three-phase coils are constructed as shown in the figure, and the respective phase coils are connected in parallel.

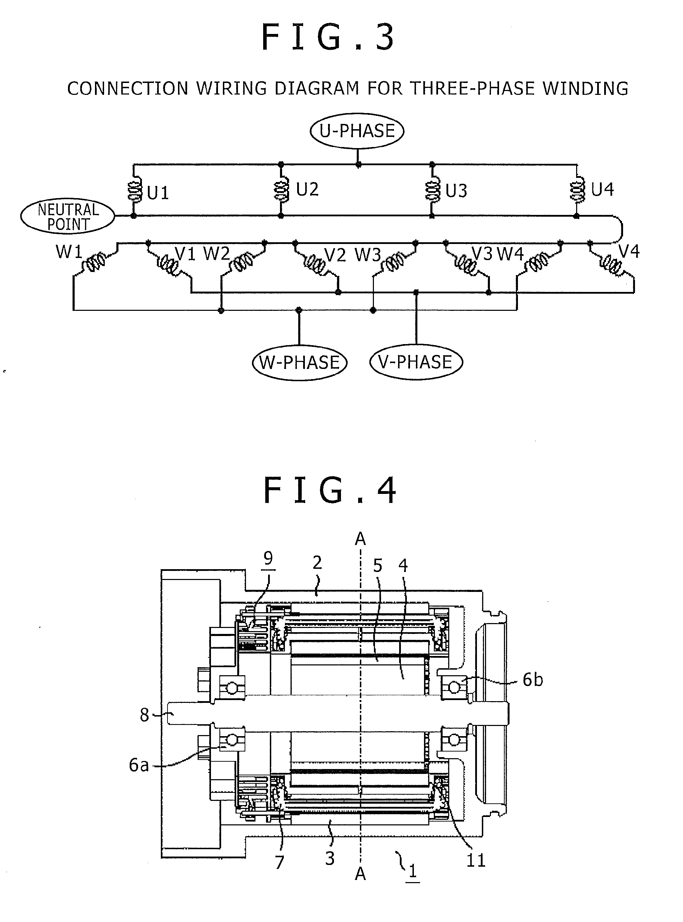

FIG. 3 shows an electric connection diagram of the case where four parallel circuits are constructed with a busbar. The four Y-connections may have their respective independent neutral points as shown in FIG. 2. However, if the busbar is used, as shown in FIG. 3, all neutral points are preferably interconnected, thereby allowing reductions in the number of operations and components. In this manner, in the case of the four parallel circuits composed of 8 poles and 12 slots, both of a winding start end and a winding finish end of each coil need to be connected to the busbar, and consequently the total number of connection points is 24. Furthermore, in the case of the four parallel circuits composed of 10 poles and 15 slots, the total number of connection points is 30. Unless a motor changes in size, available space per coil for terminal processing is reduced. In this manner, the increase in the number of poles of the motor leads to a reduction in working space and also restrictions on the busbar terminal structure.

A busbar terminal structure of the present invention will be described by using a motor for an electric power steering device according to an embodiment of the present invention.

FIG. 4 shows an axial sectional view of an in-vehicle motor 1 included in an electric power steering device. A stator core 3 is press-fitted or shrink-fitted in an inner periphery of a housing 2. The stator core 3 is provided with protrusions on which coils 7 are wound. The protrusions are commonly referred to as "teeth", and the coils 7 are wound thereon through bobbins 11 that serve as insulators. A lead wire of each coil 7 is connected to a busbar 9 to constitute a series-parallel circuit. A rotor is disposed on the inner periphery of the stator core 3. The rotor has a rotor core 4. A magnet 5 is disposed at an outer peripheral portion of the rotor core 4. Further, a magnet cover (not shown) is provided at an outer peripheral portion of the magnet 5 and has the function of preventing fly-off of magnets. A shaft 8 is provided in a central portion of the rotor core 4. Bearings 6a and 6b are disposed at either end of the shaft 8.

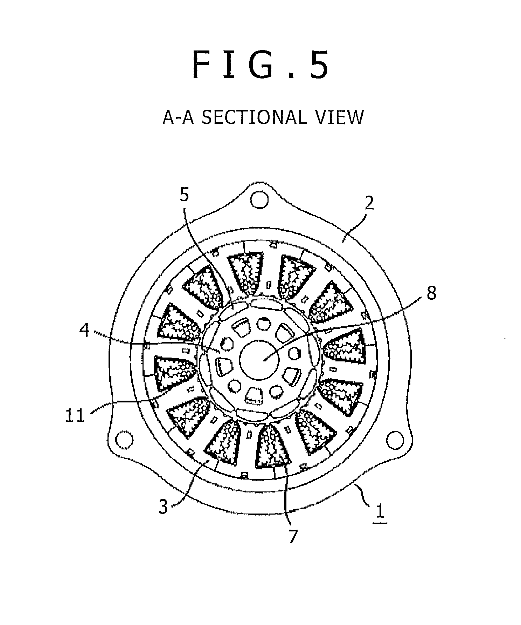

FIG. 5 is a sectional view taken along line A-A of FIG. 4. FIG. 5 shows an example of the motor that includes 10 poles on the rotor side and 12 slots on the stator side. As described above, the rotor core 4 is disposed on the outer periphery of the central shaft 8, and the magnet 5 is attached to the outer peripheral portion of the rotor core 4. The magnet cover (not shown) is provided at the outer peripheral portion of the magnet 5. The stator core 3 composed of divided cores is provided on the inner periphery of the housing 2. The bobbins 11 are attached to the stator core 3. The coils 7 are wounded on the outer periphery of the bobbins 11.

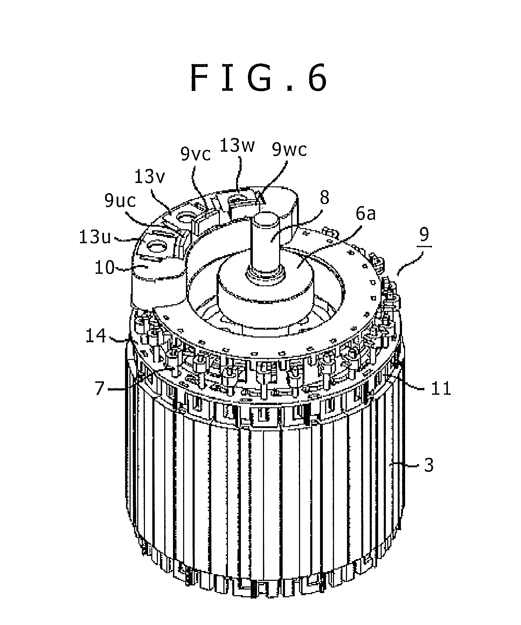

FIG. 6 is a perspective view showing the one-body stator core 3 and the busbar 9 installed in an upper portion of the stator core 3. The bobbins 11 are attached to the stator core 3, and the coils 7 are wound thereon. The winding start end and the winding finish end of each of the coils 7 are connected to the busbar 9. A busbar case 14 and connecting terminals made of copper plate within the busbar case 14 are provided at the bottom of the busbar 9. Further, a terminal stand 10 is disposed at an upper portion of the busbar 9. The terminal stand 10 is provided with a U-phase terminal 13u, a V-phase terminal 13v, and a W-phase terminal 13w. Terminal junctions 9uc, 9vc, and 9wc are electrically connected to the terminals 13u, 13v, and 13w, respectively.

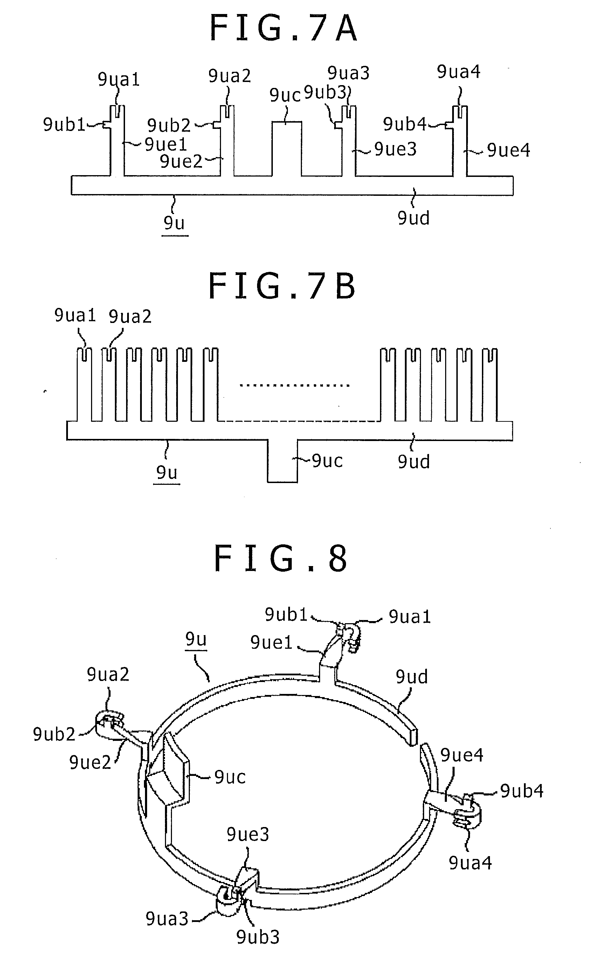

Next, the shape of the busbar 9 electrically connected to the coils 7 will be described by using a U-phase busbar 9u as an example. FIG. 7A shows the structure of fittings of the busbar 9u before molding. A flat plate made of copper plate is pressed into a flat plate shape shown in the figure to form the U-phase busbar 9u. The U-phase busbar 9u is composed of U-phase busbar arms 9ue1 to 9ue4 and a U-phase terminal junction 9uc that extend perpendicular to the longitudinal direction of a U-phase busbar band-shaped portion 9ud from the U-phase busbar band-shaped portion 9ud. The U-phase busbar arms 9ue1 to 9ue4 is provided, at the tip thereof, with U-phase coil holders 9ua1 to 9ua4 that can be electrically and mechanically connected to the coils 7, and U-phase weld portions 9ub1 to 9ub4 that can be electrically connected to the coils 7. The U-phase coil holders 9ua1 to 9ua4 each have a U-shaped structure with its leading end divided into two halves. Additionally, FIG. 7B shows a structure without the above-described U-phase weld portions 9ub1 to 9ub4. In this structure, a greater number of busbar arms can be provided. Therefore, this structure is useful when more connection portions for connecting the coils become necessary due to the increase in the number of poles. It should be noted that, as shown in FIG. 7B, the U-phase terminal junction 9uc may be provided on the opposite side of the U-phase busbar band-shaped portion 9ud from the U-phase busbar arms.

Next, molding of the pressed busbar will be described. FIG. 8 shows the shape of the U-phase busbar 9u molded into a cylindrical shape from the flat plate shape shown in FIG. 7. In the present invention, each of the U-phase busbar arms 9ue1 to 9ue4, partway along its length, is twisted at a mechanical angle of 90 degrees, and the U-phase weld portions 9ub1 to 9ub4 are vertically directed. Thus, the coils 7 extending from the stator core 3 can be oriented to be easily held by the U-phase coil holders 9ua1 to 9ua4. In other words, for example, the coils 7 can be connected to the busbar 9u without being bent for conforming to the shape of the busbar 9u, leading to better productivity.

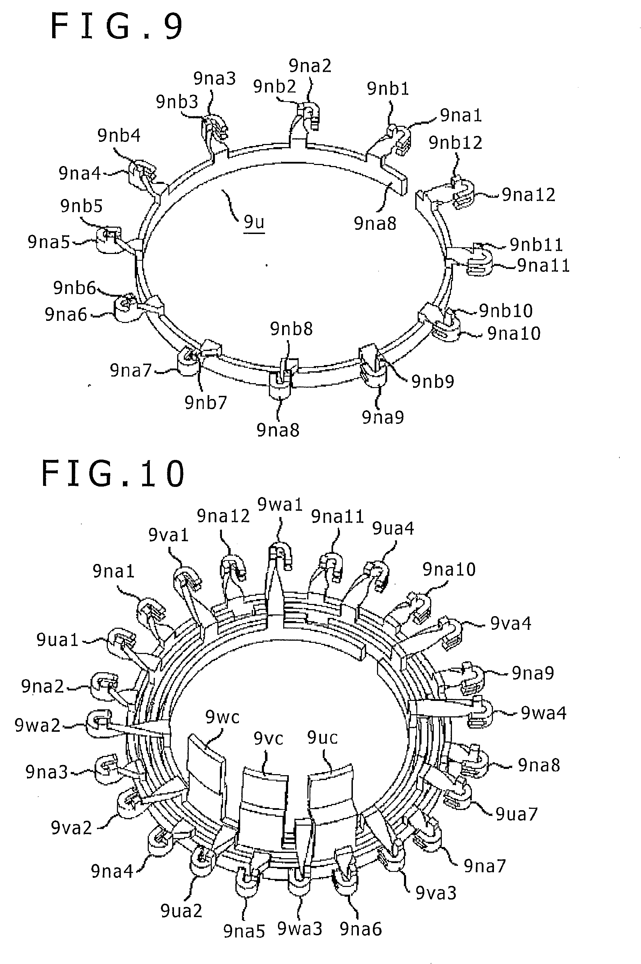

Referring to FIG. 9, the structure of a neutral busbar 9n will be described. The neutral busbar 9n has basically the same shape as the U-phase busbar 9u shown in FIG. 8. The number of busbar arms for coil connection is the same as that of the coils, that is, twelve. In the same manner as the U-phase busbar 9u, the neutral arms is provided, at the tip thereof, with coil holders and electrical junctions 9na1 to 9na12, and neutral point weld portions 9nb1 to 9nb12 provided for being welded to coil leading end portions. The coil holders and electrical junctions 9na1 to 9na12 and the neutral point weld portions 9nb1 to 9nb12 are uniformly disposed on a neutral busbar band-shaped portion 9nd. Each of the neutral connection busbar arms, partway along its length, is twisted at a mechanical angle of 90 degrees in the same manner as the foregoing, thereby allowing easy fixing of the corresponding coil thereto.

FIG. 10 shows a busbar for use in all coil connection. While the description above is in terms of the U-phase busbar and the neutral busbar, a V-phase busbar and a W-phase busbar are the same as those busbars. However, as for the positional relationship among the circumferentially-arranged busbars, the neutral busbar having the largest number of connection points is disposed on the outermost diameter side, and subsequently the three-phase busbars are arranged. In this figure, the U-phase busbar, the V-phase busbar, and the W-phase busbar are arranged in this order. In this manner, the neutral busbar having the largest number of arms is disposed at the outermost peripheral portion, thereby allowing minimization of the arm length and minimization of the busbar resistance to coil connection.

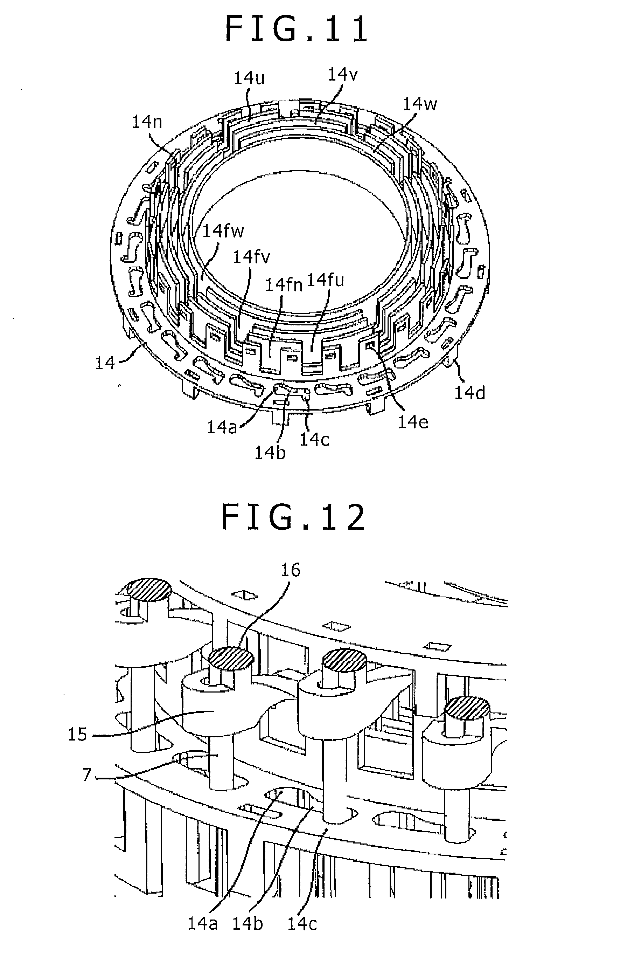

FIG. 11 shows a busbar case 14 for storing the busbar shown in FIG. 10. The busbar case 14 is provided with circumferential grooves that serve as a neutral busbar receiving portion 14n, a U-phase busbar receiving portion 14u, a V-phase busbar receiving portion 14v, and a W-phase busbar receiving portion 14w. The busbar receiving portions receive the respective busbar band-shaped portions. Also, the busbar receiving portions are each provided with a notch that serves as a busbar arm holder. The notch of each of the busbar receiving portions is constructed with the corresponding busbar arm disposed in a manner projecting toward the outer periphery through the notch. In FIG. 11, there are provided a neutral busbar arm holder 14fn, a U-phase busbar arm holder 14fu, a V-phase busbar arm holder 14fv, and a W-phase busbar arm holder 14fw. Furthermore, the busbar case 14 is provided, at the bottom thereof, with coil through-holes 14a allowing passage of the coils, coil guide portions 14b, and coil positioning portions 14c. Also, the busbar case 14 is disposed on the upper portion of the bobbins 11 and provided with bobbin joining portions 14d, the bobbin joining portions 14d being snap-fitted in holes provided in the bobbins 11.

Referring to FIG. 12, the structure with the coils 7 attached to the busbar will be described. Before the busbar is installed, the coils 7 wound on the stator core are in a vertically elongated state. The busbar case 14 is put from above the coils 7 and integrally fixed to the bobbins 11 through the bobbin joining portions 14d. At this time, the coils 7 are passed through the coil through-holes 14a for assembly. In this state, busbar terminals U, V, and W, and the neutral busbar are disposed in their respective busbar receiving portions, and each of the coils 7 is moved through the coil guide portion 14b to the coil positioning portion 14c for temporary fixing. At this time, the coil 7 is moved to the corresponding coil holder of each of the busbars and fixed by a staking portion 15. This fixing may be performed only by the mechanical fixing by crimping, or performed by the fusing allowing both of mechanical fixing and electric connection. In the case of the mechanical fixing, a weld tip portion is separately constructed for electric connection, by welding the tip of the coil 7 to the weld portion (for example, the U-phase weld portions 9ub1 to 9ub4 of the U-phase busbar 9u) provided axially outwardly of the staking portion 15 (in the direction parallel to the axis of rotation of the rotor core 4 and on the side opposite from the stator core 3). In FIG. 12, the weld tip portion is denoted by reference sign 16.

As described above, in the busbar structure for coil terminal processing, when the arms for coil connection are provided on a band-shaped plate, as a structure suitable for a prospective increase in the number of poles and slots, the arms are constructed perpendicular to the longitudinal direction of the band-shaped member. Each of the arms is twisted at a mechanical angle of 90 degrees, and provided at its leading end with a mechanical connection portion and an electric connection portion independently provided. Thus, an ideal busbar structure can be provided. Also, the arm is subjected to twisting, thereby causing an increase in axial and radial vibration resistance strength and offering the advantage of reducing loads on coil junctions. Furthermore, the coil positioning portions 14c are newly provided in the busbar case 14 for positioning the coils 7 in the busbar holders, thereby allowing the realization of temporary fixing of the coils 7 and allowing easy mechanical fixing of the coils 7. Consequently, workability is dramatically increased, and the advantage of reducing operating time is obtained.

Moreover, while the description above is in terms of a motor composed of a series of 2:3, other combinations shown by the triangle or circle in FIG. 1 may be employed in the same manner as above, in which similar advantages can be obtained.

It should be understood that the present invention is not limited to the above-described embodiment, but also can include various modifications. For example, for more clear understanding of the present invention, the above-described embodiment has been described in detail, however, the invention is not limited to a structure that includes all the constructions described above. Alternatively, the constructions of the above-described embodiment may be partially modified by addition, deletion, or substitution.

The present invention can be utilized as a busbar structure for terminal processing of in-vehicle motors, such as brushless motors or various generators included in electric power steering motors.

Features, components and specific details of the structures of the above-described embodiments may be exchanged or combined to form further embodiments optimized for the respective application. As far as those modifications are apparent for an expert skilled in the art they shall be disclosed implicitly by the above description without specifying explicitly every possible combination.

## Claims

1. An in-vehicle motor comprising a busbar for connecting a plurality of concentrated-winding stator coils (7), the busbar (9) including:
an arm (9ue1-9ue4) extending perpendicular to a longitudinal direction of the busbar;
a coil holder (9ua1-9ua4)provided at a tip of the arm (9ue1-9ue4); and
a mechanically-twisted portion provided on the arm (9ue1-9ue4).

2. The in-vehicle motor according to claim 1, wherein the coil holder (9ua1-9ua4) includes a U-shaped claw portion at a tip thereof, the claw portion holding the coil (7).

3. The in-vehicle motor according to claim 2, wherein the claw portion includes an electrical junction (9na1-9na12) and a mechanical junction.

4. The in-vehicle motor according to claim 3, wherein the coil holder (9ua1-9ua4) is axially outwardly provided with a weld portion (9ub1-9ub4) that is welded to an end of the stator coil (7).

5. The in-vehicle motor according to claim 2, further comprising:
a busbar case (14) in which the busbar (9) is disposed,
wherein the busbar case (14) is provided at a bottom thereof with a through-hole (14a) through which the stator coil (7) passes, and a positioning portion (14c) that allows temporary fixing of the coil (7).

6. The in-vehicle motor according to claim 5, wherein the busbar case (14) includes a bobbin joining portion (14d) for fixing the busbar case (14) to a bobbin (11), and a terminal stand joining portion for fixing the busbar case (14) to a terminal stand (10).

7. An electric power steering device comprising the in-vehicle motor according to any one of claims 1 to 6.
